# FASCICULE DE BREVET EUROPEEN

(11) **EP 3 329 331 B1**
(45) Date de publication et mention de la délivrance du brevet: **30.03.2022**
(21) Numéro de dépôt: 16757293.2
(22) Date de dépôt: 21.07.2016
(51) Int. Cl.: G04F 5/14, G02B 5/30, G02B 27/09, G02B 5/04, G02B 5/122

(54) **DISPOSITIF DE MISE EN FORME D'UN FAISCEAU LASER POUR UN CAPTEUR ATOMIQUE**
VORRICHTUNG ZUR FORMUNG EINES LASERSTRAHLS FÜR EINEN ATOMSENSOR
DEVICE FOR SHAPING A LASER BEAM FOR AN ATOMIC SENSOR

(30) Priorité: 28.07.2015 FR 1557210
(43) Date de publication de la demande: 06.06.2018
(73) Titulaire: Centre National de la Recherche Scientifique, 75016 Paris (FR); Université de Franche-Comté, 25000 Besançon (FR)
(72) Inventeur: PASSILLY, Nicolas, 25870 Auxon-dessus (FR); GORECKI, Christophe, 70150 Pin (FR); MAURICE, Vincent, 52200 Langres (FR)
(74) Mandataire: Marks & Clerk France
(86) Numéro de dépôt international: PCT/FR2016/051890
(87) Numéro de publication internationale: WO 2017/017351

(56) Documents cités:
- WO-A1-2009/134269
- WO-A1-2011/026251
- US-A1- 2007 070 276
- US-A1- 2009 251 224

## Description

L'invention concerne le domaine des capteurs atomiques comportant des cellules à vapeur alcaline et des dispositifs de mise en forme de faisceau laser ainsi que les dispositifs de mise en forme de faisceau laser pour de tels capteurs atomiques.

Les capteurs atomiques sont notamment des horloges atomiques, des micro-magnétomètres ou encore des microgyromètres. De tels capteurs atomiques peuvent par exemple être destinés aux systèmes de télécommunication, navigation et défense.

De tels capteurs sont parfois qualifiés de « microhorloges atomiques », « micro-magnétomètres » et « microgyromètres ». Dans l'ensemble du texte, le terme « micro » doit être compris dans le contexte et avec le sens indiqués.

Le fonctionnement des capteurs atomiques repose sur une spectroscopie optique des atomes d'un gaz emplissant une cavité munie d'une fenêtre optique. Le gaz est usuellement une vapeur alcaline, comme du césium ou du rubidium. Cette spectroscopie permet de mesurer une ou plusieurs grandeurs spectrales associées à la ou les quantités physiques que le capteur cherche à observer, par exemple une fréquence, une période temporelle, un champ magnétique ou une accélération.

De tels capteurs atomiques offrent l'intérêt d'être de petites tailles, économes en énergie et de présenter une très bonne précision et stabilité de mesure.

Un capteur atomique typique selon l'invention est une horloge atomique à l'échelle d'une puce, connue sous l'acronyme CSAC (pour Chip-Scale Atomic Clock). Un exemple en est la CSAC dénommée SA.45s de la société MICROSEMI qui présente un volume de 16 cm3, une masse de 35 g et nécessite une puissance de seulement 120mW.

Dans le cas d'une micro-horloge atomique, le fonctionnement du capteur est usuellement basé sur la mesure de la fréquence d'une transition micro-onde particulière des atomes du gaz, dite transition d'horloge et met en œuvre le principe de la résonnance atomique par piégeage cohérent de population connu sous l'acronyme CPT (pour Coherent Population Trapping).

Une telle micro-horloge atomique est également connu des travaux du consortium MAC-TFC, l'institut FEMTO-ST (acronyme pour Franche-Comté Electronique Mécanique Thermique et Optique - Sciences et Technologies) qui a développé une cellule à vapeur de césium très compacte (quelques mm3), avec micro-usinage MEMS (acronyme pour MicroElectroMechanical Systems) du silicium et soudure anodique (voir par exemple « New approach of fabrication and dispensing of micromachined cesium vapor cell » de L. Nieradko, C. Gorecki, A. Douahi, V. Giordano, J.C. Beugnot, J. Dziuban et M. Moraja publié dans JOURNAL OF MICRO-NANOLITHOGRAPHY MEMS AND MOEMS d'août 2008). Une telle cellule présente un diamètre de fenêtre optique de 2 millimètres environ.

Cette cellule a une architecture dite « transmissive », le laser, un laser à cavité verticale connu sous l'acronyme VCSEL (pour Vertical Cavity Surface Emitting Laser), et le photo détecteur, (photodiode) étant situés de part et d'autre de la cellule proprement dite, le faisceau laser la traversant de part en part, y entrant par le premier couvercle en verre et en sortant par le second couvercle en verre.

Le faisceau issu d'un tel laser à cavité verticale est caractérisé par une divergence (FWHM 10-15°) et une taille (de l'ordre de 20 microns au niveau du miroir de sortie) relativement faibles.

Ainsi, la distance requise pour atteindre un diamètre de faisceau correspondant à la fenêtre optique de la cellule et permettant d'éclairer l'ensemble des atomes, si possible avec des intensités équivalentes (illumination uniforme), est donc élevée si aucun dispositif supplémentaire n'est ajouté, ce qui limite la taille minimale du capteur atomique.

Pour cela, dans le cadre du consortium MAC-TFC, a été développé un système télescopique permettant d'augmenter la divergence du faisceau et de collimater le faisceau avant son entrée dans la cellule.

Une telle solution permet de réduire l'encombrement mais implique un alignement de plusieurs composants optiques qui est une opération délicate aux dimensions de la cellule.

Une autre solution est notamment connue du document US 7619485 et illustrée en particulier sur la figure 6 de ce document. Cette solution consiste à replier le faisceau laser issu du laser à cavité verticale, à l'aide de miroirs ou d'un prisme, sans changer les valeurs de divergence du faisceau.

Une telle solution permet de s'affranchir d'alignements contraignants. En effet, contrairement aux lentilles, un mauvais positionnement du système de repli (en translation) n'est pas plus dommageable que le serait la même erreur de positionnement de la source ou de la cellule.

L'utilisation d'un prisme présente à cet égard l'intérêt, par rapport à des miroirs diélectriques (présentant également une faible absorption) d'offrir un excellent contrôle de l'orientation des surfaces réfléchissantes. En effet, la tolérance angulaire est en général spécifiée à ±15 arcsec (±0.004°) même pour des prismes de quelques millimètres de côté.

Toutefois, la spectroscopie de la vapeur alcaline par le mécanisme du piégeage cohérent de population requiert un faisceau laser entrant dans la cellule dont l'état de polarisation est circulaire.

Par ailleurs, les réflexions du faisceau laser dans le prisme peuvent modifier sensiblement la polarisation du faisceau laser. En effet, même si le faisceau lumineux ne quitte par le prisme lorsque l'angle d'incidence est supérieur à l'angle critique défini plus haut (i.e. il n'y a pas de flux d'énergie à travers le dioptre), le champ électromagnétique pénètre en revanche légèrement dans le milieu extérieur, avec des profondeurs de pénétration différentes selon l'orientation du champ électrique (parallèle ou perpendiculaire au plan d'incidence). Les deux composantes du faisceau laser subissant des déphasages différents, un faisceau laser polarisé linéairement deviendra par exemple polarisé elliptiquement après une réflexion totale. L'article « Polarization properties of retroreflecting right-angle Prisms » de A. M. A. Azzam paru dans la revue Applied Optics, vol. 47, p359 (2008) décrit notamment plus en détail ce phénomène. Le document US 2009/251224 A1 divulgue un dispositif de mise en forme d'un faisceau laser, destiné à être inclus dans un capteur atomique tel qu'une horloge atomique.

Il existe ainsi un besoin pour un dispositif de mise en forme de faisceau laser garantissant un dimensionnement et une polarisation contrôlée d'un faisceau laser à l'entrée de la cellule d'un capteur atomique. Il existe aussi un besoin pour un tel dispositif qui offre une déperdition de puissance limitée du faisceau laser lors de la mise en forme. Il existe enfin un besoin pour un tel dispositif qui soit le plus petit possible et dont la fabrication et l'intégration dans un capteur atomique soit aisés, notamment en limitant le nombre d'alignements optiques contraignants à mettre en œuvre.

L'invention a ainsi pour premier objet un dispositif de mise en forme d'un faisceau laser, comprenant toutes les caractéristiques de la revendication 1.

L'invention a également pour objet un procédé de fabrication d'un dispositif de mise en forme d'un faisceau laser destiné notamment à être inclus dans un capteur atomique tel qu'une horloge atomique, un magnétomètre atomique ou un gyromètre atomique, comprenant les étapes de la revendication 8.

L'invention a enfin pour objet un capteur atomique comportant un dispositif de mise en forme d'un faisceau laser tel que défini dans la revendication 11. Les revendications dépendantes définissent des modes de réalisation additionnels.

Sur les dessins :
- la figure 1 est un schéma en coupe transversale d'un capteur atomique selon un mode de réalisation de l'invention, comportant un dispositif de mise en forme d'un faisceau laser selon un mode de réalisation de l'invention, à laquelle sont associés un laser d'émission d'un faisceau laser ainsi qu'une cavité emplie d'un gaz apte à être pénétrée par un faisceau laser mis en forme et un photodétecteur de réception d'un faisceau laser ayant pénétré la cellule,
- la figure 2 est une vue de détail en perspective d'un polariseur linéaire du dispositif de mise en forme d'un faisceau laser de la figure 1, comportant un réseau métallique de lames métalliques,
- la figure 3 est une vue de détail en perspective d'une lame à biréfringence de forme du dispositif de mise en forme d'un faisceau laser de la figure 1, comportant un réseau diélectrique sub-longueur d'onde d'ordre zéro de lames diélectriques, et
- la figure 4 est un schéma de détail en perspective du dispositif de mise en forme d'un faisceau laser de la figure 1, sur lequel est indiqué le trajet d'un faisceau laser comprenant des portions de faisceau laser initial, faisceau laser entrant, faisceau laser interne, faisceau laser sortant et faisceau laser mis en forme.

Sur les différentes figures, les mêmes références désignent des éléments identiques ou similaires.

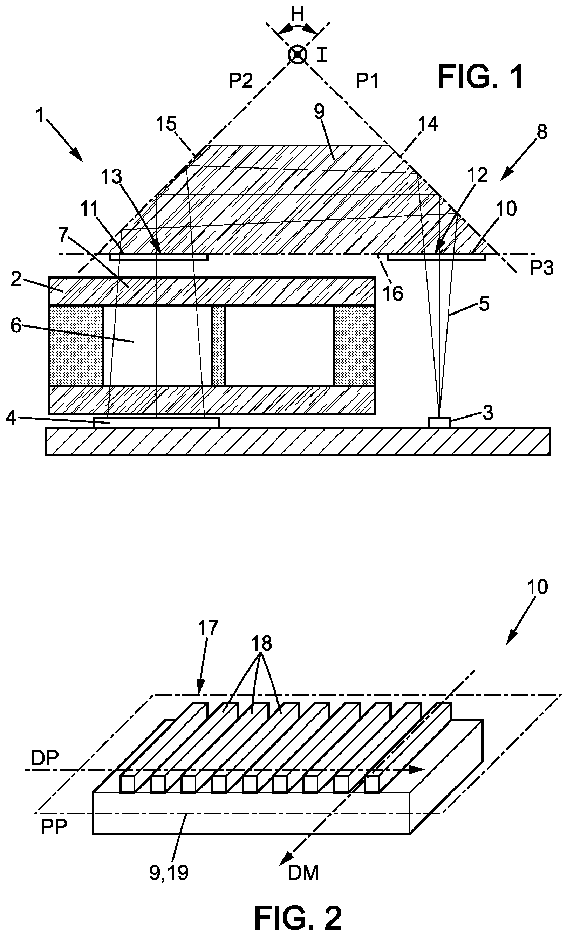

La figure 1 illustre un exemple d'un capteur atomique 1 selon l'invention incorporant une cellule à vapeur alcaline 2, un laser 3 d'émission d'un faisceau laser, par exemple un laser à cavité verticale (VCSEL pour Vertical Cavity Surface Emitting Laser) et un photodétecteur de réception 4 d'un faisceau laser ayant pénétré dans la cellule 2. On désigne par 5, le faisceau laser.

Le capteur atomique 1 est par exemple une horloge atomique à l'échelle d'une puce (CSAC pour Chip-Scale Atomic Clock) reposant sur le principe de la résonance atomique par piégeage cohérent de population (CPT pour Coherent Population Trapping).

Dans des variantes de l'invention, le capteur atomique 1 pourrait être un magnétomètre atomique ou un gyromètre atomique par exemple.

La cellule 2 comprend notamment une cavité de gaz 6 munie d'au moins une fenêtre optique 7 et emplie d'un gaz. Le gaz est par exemple un gaz comprenant un élément alcalin en phase vapeur comme du césium ou du rubidium et, le cas échéant un gaz tampon. Le terme « gaz » peut désigner un gaz, une vapeur, ou une vapeur alcaline ou un mélange d'un gaz et d'une vapeur.

Le capteur atomique 1 comporte par ailleurs un dispositif 8 de mise en forme d'un faisceau laser.

Le dispositif 8 est intercalé, sur le trajet du faisceau laser 5, entre le laser 3 et la cellule 2 et est apte à recevoir un faisceau laser 5 du laser 3 et à transmettre un faisceau laser 5 pénétrant dans la cavité de gaz 6 par la fenêtre optique 7 de la cellule 2.

Le dispositif 8 de mise en forme comprenant un prisme rétro-réflecteur 9, un polariseur linéaire 10 et une lame à biréfringence de forme 11.

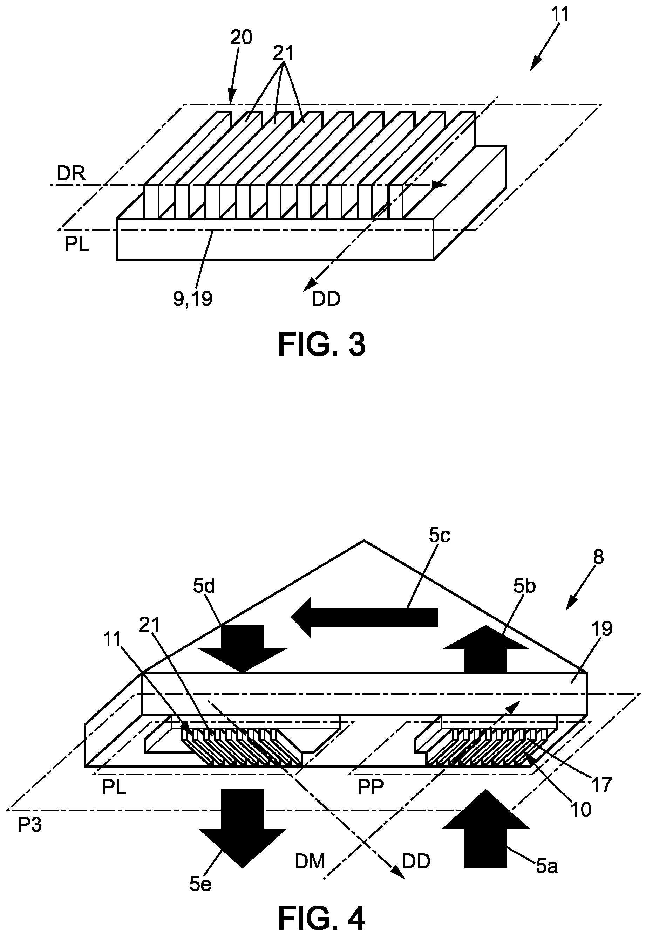

Comme illustré sur les figures 1 et 4, le prisme rétro-réflecteur 9 comporte une zone d'entrée 12 d'un faisceau laser entrant 5b, une zone de sortie 13 d'un faisceau laser sortant 5d ainsi que deux faces de réflexion 14, 15 d'un faisceau laser interne 5c.

Les faces de réflexion 14, 15 forment entre elles un angle droit.

Par « les faces forment entre elles un angle droit », on entend que les faces de réflexion 14, 15 s'étendent respectivement selon des plans géométriques d'extension respectifs P1, P2, tels que lesdits plans géométriques d'extension P1, P2 forment un angle droit géométrique l'un avec l'autre.

Dans l'exemple de réalisation de la figure 1, la zone d'entrée 13 et la zone de sortie 13 forment deux portions d'une face de transmission 16 du prisme rétro-réflecteur 9.

La face de transmission 16 du prisme rétro-réflecteur 9 peut par exemple être orientée à 45° de chacune des faces de réflexion 14, 15.

Ici également, par « la face de transmission est orientée à 45° de chacune des faces de réflexion 14, 15 », on entend que la face de transmission s'étend selon un plan géométrique d'extension P3 et les faces de réflexion 14, 15 s'étendent respectivement selon des plans géométriques d'extension respectifs P1, P2, tels que le plan géométrique d'extension P3 de la face de transmission forme un angle géométrique de 45° avec chacun des plans géométriques d'extension P1, P2 des faces de réflexion 14, 15.

On remarquera que, autant l'angle entre les faces de réflexion 14, 15 doit être précisément contrôlé pour garantir une rétro-réflexion du faisceau laser, autant l'orientation entre la face de transmission 16 et les faces de réflexion 14, 15 est moins critique car elle implique, au moins pour des angles faibles, principalement un décalage spatial du faisceau et non une erreur angulaire.

Ainsi, par exemple, l'angle entre les faces de réflexion 14, 15 est avantageusement proche de 90° à ±15 arcsec (±0.004°).

Le trajet du faisceau laser 5 dans le prisme rétro-réflecteur est illustré sur la figure 4 et se décompose de la manière suivante.

Un faisceau laser entrant 5b pénètre dans le prisme rétro-réflecteur 9 par la zone d'entrée 12 et rencontre une première face de réflexion 14 pour générer un faisceau laser interne 5c. Le faisceau laser interne 5c se propage dans le prisme rétro-réflecteur jusqu'à rencontrer une seconde face de réflexion 15 et générer un faisceau laser sortant 5d quittant le prisme rétro-réflecteur 9 par la zone de sortie 13.

Le faisceau laser entrant 5b et le faisceau laser sortant 5d sont ainsi parallèles entre eux dans un plan de coupe H du prisme rétro-réflecteur 9.

Un tel plan de coupe H du prisme rétro-réflecteur 9 est notamment un plan perpendiculaire à direction d'intersection I entre des plans géométriques d'extension P1, P2 respectifs des deux faces de réflexion 14, 15.

Le prisme rétro-réflecteur peut par exemple être réalisé en un matériau tel que le N-BK7, Sodalime, N-BaK1 ou encore N-SF11.

Avantageusement, le prisme rétro-réflecteur peut être réalisé en un matériau présentant un indice de réfraction suffisamment élevé pour garantir une réflexion totale du faisceau laser incident même lorsque celui-ci présente une divergence relative élevée, comme illustré sur la figure 1.

Le prisme rétro-réflecteur peut être par exemple être réalisé en N-BaK1 caractérisé par un indice de réfraction n=1,564 à une longueur d'onde de 852,1 nm, un tel indice de réfraction garantissant une réflexion totale pour un faisceau laser présentant un angle d'incidence sur la face de transmission 16 compris entre -8° et +8°.

Le polariseur linéaire 10 est illustré plus en détail sur la figure 2 et comporte un réseau métallique 17 sub-longueur d'onde.

Ce réseau métallique 17 sub-longueur d'onde comporte une pluralité de lames métalliques 18. Les lames métalliques 18 s'étendent parallèlement les unes aux autres selon une direction de lame métallique DM.

Les lames métalliques 18 sont par ailleurs juxtaposées les unes par rapport aux autres selon une direction passante DP du réseau métallique 17 perpendiculaire à la direction de lame métalliques DM.

Par « réseau sub-longueur d'onde », on entend notamment que les lames métalliques sont juxtaposées les unes par rapport aux autres avec une période spatiale selon la direction passante DP inférieure à la longueur d'onde du faisceau laser 5, sous incidence normale, divisée par l'indice de réfraction du substrat supportant les lames métalliques, par exemple inférieure à environ 900 nm dans le cas d'une horloge atomique au césium.

Les lames métalliques 18 sont par exemple réalisées en aluminium ou en or.

Ainsi, le polariseur linéaire 10 peut par exemple être formé par dépôt d'une couche de matériau métallique sur une plaquette - ou wafer - en verre 19, notamment une couche d'aluminium ou d'or.

Dans un exemple de réalisation fourni à titre purement indicatif, le polariseur linéaire 10 est formé par dépôt d'une couche d'aluminium d'une épaisseur de 300 nm mise en forme pour présenter des lames métalliques 18 espacées les unes des autres avec une période de 200 nm et ayant chacune une largeur de 90 nm selon la direction passante du réseau 17, c'est-à-dire présentant un facteur de remplissage (largeur/période) de 0,45.

Dans un autre exemple de réalisation fourni également à titre purement indicatif, le polariseur linéaire 10 est formé par dépôt d'une couche d'or d'une épaisseur de 350 nm mise en forme pour présenter des lames métalliques 18 espacées les unes des autres avec une période de 200 nm et ayant chacune une largeur de 157 nm selon la direction passante du réseau 17, c'est-à-dire présentant un facteur de remplissage (largeur/période) de 0, 45.

D'autres dimensionnements du polariseur linéaire 10, du réseau métallique 17 et des lames métalliques 18 sont bien évidemment envisageables.

Le polariseur linéaire 10 est disposé en amont de la zone d'entrée 12 du prisme rétro-réflecteur 9 de sorte à être traversé par un faisceau laser entrant 5b dans le prisme rétro-réflecteur 9 par la zone d'entrée 12. Le polariseur linéaire 10 est apte à imposer une polarisation linéaire audit faisceau laser entrant 5b.

Plus précisément, le polariseur linéaire 10 reçoit un faisceau laser initial 5a émis par le laser 3 et le transforme en un faisceau laser entrant 5b ayant une polarisation linéaire définie.

En effet, la composante du faisceau laser initial 5a incident qui est parallèle à la direction de lame métalliques DM est convertie en un déplacement d'électrons dans les lames métalliques 18 et donc absorbée par le polariseur linéaire 10, tandis que la composante du faisceau laser initial 5a incident qui est parallèle à la direction passante DP du réseau métallique est laissée intacte dans le faisceau laser entrant 5b.

Dans un mode de réalisation particulier de l'invention, le laser 3 d'émission, par exemple un laser à cavité verticale (VCSEL pour Vertical Cavity Surface Emitting Laser), peut comporter un réseau qui garantit l'oscillation sur un seul mode de polarisation, notamment une polarisation linéaire fixée et connue. Dans ce mode de réalisation, le faisceau laser initial 5a peut alors présenter une polarisation linéaire selon une direction de polarisation DL fixée par le laser 3.

Il est important de noter que les contraintes d'assemblage du laser 3 dans le capteur atomique 1 rendent très délicat l'alignement précis de cette direction de polarisation DL avec les autres éléments du capteur atomique comme la lame à biréfringence de forme 11, le prisme à réflexion 9 ou encore la cellule optique 2.

Avantageusement, la polarisation linéaire du faisceau laser initial 5a, émis par le laser 3 d'émission, est sensiblement alignée avec la direction passante DP du réseau métallique 17 du polariseur linéaire 10, c'est-à-dire que la direction de polarisation DL et la direction passante DP du réseau métallique sont sensiblement alignées.

Par « sensiblement alignée », on entend que les deux directions sont parallèles ou bien proche d'être parallèles, par exemple forment un angle inférieur à 10° entre elles.

Par ailleurs, le polariseur linéaire 10 est placé en regard de la face de transmission 16 du prisme rétro-réflecteur 9, en étant soit disposé sur ladite face de transmission 16 soit formés sur une plaquette - ou wafer - en verre 19 en contact avec ladite face de transmission 16.

Comme illustré sur la figure 2, le réseau métallique 17 du polariseur linéaire 10 peut notamment s'étendre dans un plan géométrique d'extension PP, formé par la direction passante DP et la direction de lame métalliques DM, tel que ledit plan géométrique d'extension PP soit parallèle au plan géométrique d'extension P3 de la face de transmission 16.

La direction passante DP du réseau métallique 17 peut en particulier être parallèle à la direction d'intersection I entre les plans géométrique d'extension P1, P2 des deux faces de réflexion 14, 15.

De cette manière, la polarisation linéaire appliquée au faisceau laser entrant 5b est conservée lors des réflexions dans le prisme 9 et donc conservée dans le faisceau laser sortant 5d.

Par ailleurs, la lame à biréfringence de forme 11 est illustrée plus en détail sur la figure 3. La lame à biréfringence de forme 11 est par exemple une lame à biréfringence de forme, ou à biréfringence artificielle.

A cette fin, la lame à biréfringence de forme 11 comporte un réseau diélectrique 20 sub-longueur d'onde d'ordre zéro.

Ce réseau diélectrique 20 comporte une pluralité de lames diélectriques 21. Les lames diélectriques 21 s'étendent parallèlement les unes aux autres selon une direction de lame diélectrique DD.

Les lames diélectriques 21 sont par ailleurs juxtaposées les unes par rapport aux autres selon une direction de réseau diélectrique DR perpendiculaire à la direction de lame diélectrique DD.

Par « réseau sub-longueur d'onde », on entend ici également que les lames diélectriques sont juxtaposées les unes par rapport aux autres avec une période spatiale selon la direction de réseau diélectrique DR inférieure à la longueur d'onde du faisceau laser 5, sous incidence normale, divisée par l'indice de réfraction du substrat supportant les lames diélectriques, par exemple inférieure à environ 900 nm dans le cas d'une horloge atomique au césium.

Par « réseau diélectrique d'ordre zéro », en anglais « zero order grating », on entend un réseau diélectrique dont la période séparant les lames diélectriques est suffisamment petite pour que le réseau diélectrique ne génère pas d'ordres de diffraction propagatifs excepté les ordres 0.

Un tel réseau diélectrique d'ordre zéro permet de contrôler le déphasage entre la composante transverse électrique et la composante transverse magnétique d'un faisceau laser incident, et donc la polarisation de la lumière sortante en fonction de la polarisation de la lumière entrante.

Les lames diélectriques 21 sont par exemple réalisées en verre ou en nitrure de silicium (Si₃N₄).

Ainsi, la lame à biréfringence de forme 11 peut par exemple être formée par dépôt d'une couche de nitrure de silicium (Si₃N₄) sur une plaquette - ou wafer - en verre 19, par exemple la plaquette - ou wafer - en verre 19 sur laquelle est formé le polariseur linéaire 10.

Alternativement, la lame à biréfringence de forme 11 peut être formée en verre (silice), par exemple par gravure d'une plaquette - ou wafer - en verre 19, par exemple la plaquette - ou wafer - en verre 19 sur laquelle est formé le polariseur linéaire 10.

Dans un exemple de réalisation fourni à titre purement indicatif, la lame à biréfringence de forme 11 est formée par gravure d'une plaquette - ou wafer - en verre 19, mise en forme pour présenter des lames diélectriques 21 d'une épaisseur de 2710 nm espacées les unes des autres avec une période de 580 nm, le réseau diélectrique 20 présentant un facteur de remplissage (largeur/période) de 0,464. Le rapport d'aspect d'un tel réseau (épaisseur/largeur) est donc d'environ 10.

Dans un autre exemple de réalisation fourni également à titre purement indicatif, la lame à biréfringence de forme 11 est formée par dépôt d'une couche de nitrure de silicium d'une épaisseur de 598 nm mise en forme pour présenter des lames diélectriques 21 espacées les unes des autres avec une période de 580 nm, le réseau diélectrique 20 présentant un facteur de remplissage (largeur/période) de 0,331. Le rapport d'aspect d'un tel réseau (épaisseur/largeur) est donc d'environ 3.

D'autres dimensionnements de la lame à biréfringence de forme 11, du réseau diélectrique 20 et des lames diélectriques 21 sont bien évidemment envisageables.

La lame à biréfringence de forme 11 est disposée en aval de la zone de sortie 13 du prisme rétro-réflecteur 9 de sorte à être traversé par un faisceau laser sortant 5d du prisme rétro-réflecteur 9 par la zone d'entrée 13. La lame à biréfringence de forme 11 est apte à imposer une polarisation circulaire audit faisceau laser sortant 5d pour obtenir un faisceau laser mis en forme 5e.

Un tel réseau diélectrique d'ordre zéro permet de contrôler le déphasage entre la composante transverse électrique et la composante transverse magnétique d'un faisceau laser incident, et donc la polarisation de la lumière sortante en fonction de la polarisation de la lumière entrante.

En effet, comme détaillé ci-avant, le réseau diélectrique 20 permet de contrôler le déphasage entre la composante transverse électrique et la composante transverse magnétique d'un faisceau laser incident, et donc la polarisation de la lumière sortante en fonction de la polarisation de la lumière entrante. Le réseau diélectrique 20 se comporte donc comme un matériau anisotrope, où l'anisotropie ne relève pas des propriétés intrinsèque du matériau mais dépend de la structure périodique réalisée à sa surface, qui est suffisamment petite pour manipuler l'indice de réfraction artificiellement.

Les dimensions du réseau diélectrique 20 sont déterminées de sorte à ce que, pour un faisceau sortant 5d ayant une polarisation linéaire, la polarisation du faisceau mis en forme 5e soit circulaire, et par exemple présente une ellipticité de la polarisation circulaire inférieure à 1,1. Les exemples de réseau diélectriques 21 détaillés ci-dessus permettent d'obtenir une telle polarisation.

Pour adapter les dimensions du réseau diélectrique 20, on peut par exemple mettre en œuvre les équations des théories du milieu effectif (en anglais « EMT »). A ce sujet, il est également fait référence aux indications du document "Submicrometer periodicity gratings as artificial anisotropic dielectrics," de D. C. Flanders, paru dans la revue Appl. Phys. Lett. 42, 492-494 (1983).

Par ailleurs, la lame à biréfringence de forme 11 est placé en regard de la face de transmission 16 du prisme rétro-réflecteur 9, en étant soit disposé sur ladite face de transmission 16 soit formés sur une plaquette - ou wafer - en verre 19 en contact avec ladite face de transmission 16.

Ainsi par exemple, le polariseur linéaire 10 et la lame à biréfringence de forme 11 peuvent être disposés côte à côte sur la plaquette - ou wafer - en verre 19.

Comme illustré sur la figure 3, le réseau diélectrique 20 de la lame à biréfringence de forme 11 peut notamment s'étendre dans un plan géométrique d'extension PL, formé par la direction de lame diélectrique DD et la direction de réseau diélectrique DR, tel que ledit plan géométrique d'extension PL soit parallèle au plan géométrique d'extension P3 de la face de transmission 16.

Par ailleurs, le plan géométrique d'extension PL du réseau diélectrique 20 peut être parallèle au plan géométrique d'extension PP du réseau métallique 17.

Plus particulièrement, la direction de lame diélectrique DD du réseau diélectrique 21 peut former un angle de 45° avec la direction de lame métallique DM.

De manière similaire, étant donné que la direction de réseau diélectrique DR et la direction de lame diélectrique DD du réseau diélectrique 21 sont perpendiculaires, la direction de réseau diélectrique DR peut former un angle de 45° avec la direction de lame métallique DM.

Ou encore, étant donné que la direction passante DP du réseau métallique et la direction de lame métallique DM du réseau métallique 17 sont perpendiculaires, la direction passante DP du réseau métallique peut former un angle de 45° avec la direction de réseau diélectrique DR ou la direction de lame diélectrique DD.

De ces manières, le faisceau laser mis en forme 5e peut présenter une polarisation circulaire.

## Revendications

1. Dispositif (8) de mise en forme d'un faisceau laser (5), destiné notamment à être inclus dans un capteur atomique (1) tel qu'une horloge atomique, un magnétomètre atomique ou un gyromètre atomique, en étant associé, d'une part, à un laser (3) d'émission d'un faisceau laser (5), et, d'autre part, à une cellule (2) à vapeur alcaline comprenant une cavité (6) emplie d'un gaz apte à être pénétrée par un faisceau laser mis en forme (5e) et à un photodétecteur de réception (4) d'un faisceau laser ayant pénétré la cellule,
le dispositif de mise en forme comprenant un prisme rétro-réflecteur (9) comportant une zone d'entrée (12) d'un faisceau laser entrant (5b), une zone de sortie (13) d'un faisceau laser sortant (5d) ainsi que deux faces de réflexion (14, 15) d'un faisceau laser interne (5c), lesdites faces de réflexion formant entre elles un angle droit, une lame à biréfringence de forme (11) disposée en aval de la zone de sortie (13) du prisme rétro-réflecteur de sorte à être traversée par un faisceau laser sortant (5d) du prisme rétro-réflecteur par la zone de sortie et apte à imposer une polarisation circulaire audit faisceau laser sortant pour obtenir un faisceau laser mis en forme (5e),
le dispositif de mise en forme étant **caractérisé en ce qu'**il comprend en outre
un polariseur linéaire (10) disposé en amont de la zone d'entrée (12) du prisme rétro-réflecteur (9) de sorte à être traversé par un faisceau laser entrant (5b) dans le prisme rétro-réflecteur par la zone d'entrée et apte à imposer une polarisation linéaire audit faisceau laser entrant.

2. Dispositif selon la revendication 1, dans lequel le polariseur linéaire (10) comporte un réseau métallique (17) sub-longueur d'onde, et dans lequel le réseau métallique sub-longueur d'onde du polariseur linéaire comporte une pluralité de lames métalliques (18) s'étendant parallèlement les unes aux autres selon une direction de lame métallique (DM) et étant juxtaposées les unes par rapport aux autres selon une direction passante du réseau métallique (DP) perpendiculaire à la direction de lame métalliques.

3. Dispositif selon la revendication 2, dans lequel la direction passante (DP) du réseau métallique (17) est parallèle à une direction d'intersection (I) entre des plans géométrique d'extension (P1, P2) respectifs des deux faces de réflexion (14, 15).

4. Dispositif selon l'une quelconque des revendications 1 à 3, dans lequel la lame à biréfringence de forme (11) comporte un réseau diélectrique (20) sub-longueur d'onde d'ordre zéro, et dans lequel le réseau diélectrique sub-longueur d'onde d'ordre zéro de la lame à biréfringence de forme comporte une pluralité de lames diélectriques (21) s'étendant parallèlement les unes aux autres selon une direction de lame diélectrique (DD) et étant juxtaposées les unes par rapport aux autres selon une direction de réseau diélectrique (DR) perpendiculaire à la direction de lame diélectrique.

5. Dispositif selon la revendication 4 et l'une quelconque des revendications 2 et 3, dans lequel la direction de lame diélectrique (DD) forme un angle de 45° avec la direction de lame métallique (DM).

6. Dispositif selon l'une quelconque des revendications 1 à 5, dans lequel le polariseur linéaire (10) et la lame à biréfringence de forme (11) sont disposés côte à côte sur une plaquette - ou wafer - en verre (19).

7. Dispositif selon l'une quelconque des revendications 1 à 6, dans lequel la zone d'entrée (12) et la zone de sortie (13) du prisme rétro-réflecteur (9) forment deux portions d'une face de transmission (16) du prisme rétro-réflecteur, et dans lequel le polariseur linéaire (10) et la lame à biréfringence de forme (11) sont placés en regard de ladite face de transmission(16), étant soit formés sur ladite face de transmission (16) soit formés sur une plaquette - ou wafer - en verre (19) placée en regard de ladite face de transmission (16).

8. Procédé de fabrication d'un dispositif (8) de mise en forme d'un faisceau laser (5) destiné notamment à être inclus dans un capteur atomique (1) tel qu'une horloge atomique, un magnétomètre atomique ou un gyromètre atomique, en étant associé, d'une part, à un laser (3) d'émission d'un faisceau laser (5), et, d'autre part, à une cellule (2) à vapeur alcaline comprenant une cavité (6) emplie d'un gaz apte à être pénétrée par un faisceau laser mis en forme (5e) et à un photodétecteur de réception (4) d'un faisceau laser ayant pénétré la cellule, dans lequel :
- on dispose d'un prisme rétro-réflecteur (9) comportant une zone d'entrée (12) d'un faisceau laser entrant (5b), une zone de sortie (13) d'un faisceau laser sortant (5d) ainsi que deux faces de réflexion (14, 15) d'un faisceau laser interne (5c), lesdites faces de réflexion formant entre elles un angle droit,
- on forme et on dispose un polariseur linéaire (10) apte à imposer une polarisation linéaire à un faisceau laser entrant (5b) et disposé en amont de la zone d'entrée (12) du prisme rétro-réflecteur de sorte à être traversé par un faisceau laser entrant dans le prisme rétro-réflecteur par la zone d'entrée, et
- on forme et on dispose une lame à biréfringence de forme (11) apte à imposer une polarisation circulaire à un faisceau laser sortant (5d) et disposée en aval de la zone de sortie (13) du prisme rétro-réflecteur de sorte à être traversée par un faisceau laser sortant du prisme rétro-réflecteur par la zone de sortie.

9. Procédé selon la revendication 8, dans lequel
on forme le polariseur linéaire (10) par dépôt d'une couche de matériau métallique sur une plaquette - ou wafer - en verre (19), notamment une couche d'aluminium ou d'or, et
on forme la lame à biréfringence de forme (11) sur ladite plaquette - ou wafer - en verre (19) soit par dépôt d'une couche de matériau diélectrique, notamment une couche de nitrure de silicium, sur ladite plaquette - ou wafer - en verre soit par gravure de ladite plaquette - ou wafer - en verre,
on dispose le polariseur linéaire (10) en amont de la zone d'entrée (12) du prisme rétro-réflecteur et la lame à biréfringence de forme (11) en aval de la zone de sortie (13) du prisme rétro-réflecteur (9) en plaçant la plaquette - ou wafer - en verre (19) en regard d'une face de transmission (16) du prisme rétro-réflecteur (9), la zone d'entrée (12) et la zone de sortie (13) du prisme rétro-réflecteur formant deux portions de ladite face de transmission (16).

10. Procédé selon la revendication 8, dans lequel
on forme et on dispose le polariseur linéaire (10) en amont de la zone d'entrée (12) du prisme rétro-réflecteur (9) par dépôt d'une couche de matériau métallique, notamment une couche d'aluminium ou d'or, sur une face de transmission (16) du prisme rétro-réflecteur (9), la zone d'entrée (12) du prisme rétro-réflecteur (9) formant une portion de ladite face de transmission (16), et
on forme et on dispose la lame à biréfringence de forme (11) en aval de la zone de sortie (13) du prisme rétro-réflecteur (9) soit par dépôt d'une couche de matériau diélectrique, notamment une couche de nitrure de silicium, sur la face de transmission (16) du prisme rétro-réflecteur (9), la zone de sortie (13) du prisme rétro-réflecteur formant une portion de ladite face de transmission (16), soit par gravure de ladite face de transmission (16).

11. Capteur atomique (1) comportant un dispositif (8) de mise en forme d'un faisceau laser (5) selon l'une quelconque des revendications 1 à 7, associé, de façon compacte, d'une part, à un laser (3) d'émission d'un faisceau laser (5) et, d'autre part, à une cellule (2) à vapeur alcaline comprenant une cavité (6) emplie d'un gaz apte à être pénétrée par un faisceau laser mis en forme (5e) et un photodétecteur de réception (4) d'un faisceau laser (5) ayant pénétré la cellule.

12. Capteur atomique (1) selon la revendication 11, dans lequel une direction préférentielle de polarisation (DL) d'un faisceau laser (5) émis par le laser (3) d'émission est sensiblement alignée avec la direction passante (DP) du réseau métallique (17) du polariseur linéaire (10).

## Patentansprüche

1. Vorrichtung (8) zur Formung eines Laserstrahls (5), insbesondere dafür gedacht, in einem Atomsensor (1), wie einer Atomuhr, einem Atommagnetometer oder einem Atomgyrometer, enthalten zu sein, indem sie einerseits einem Emissionslaser (3) eines Laserstrahls (5) und andererseits einer Alkalidampfzelle (2), die einen Hohlraum (6) umfasst, der mit einem Gas gefüllt ist und in den ein geformter Laserstrahl (5e) eindringen kann, und einem Fotoempfänger (4) zum Empfangen eines Laserstrahls, der in die Zelle eingedrungen ist, zugeordnet wird,
wobei die Vorrichtung zur Formung ein Retroreflektorprisma (9) umfasst, das einen Eintrittsbereich (12) für einen eintretenden Laserstrahl (5b), einen Austrittsbereich (13) für einen austretenden Laserstrahl (5d) sowie zwei Reflexionsflächen (14, 15) für einen internen Laserstrahl (5c) aufweist, wobei die Reflexionsflächen zwischen sich einen rechten Winkel bilden, eine Formdoppelbrechungslamelle (11) derart stromabwärts des Austrittsbereichs (13) des Retroreflektorprismas angeordnet ist, dass sie von einem durch den Austrittsbereich aus dem Retroreflektorprisma austretenden Laserstrahl (5d) gequert wird und den austretenden Laserstrahl in eine kreisförmige Polarisation bringen kann, um einen geformten Laserstrahl (5e) zu erhalten,
wobei die Vorrichtung zur Formung **dadurch gekennzeichnet ist, dass** sie ferner einen linearen Polarisator (10) umfasst, der derart stromaufwärts des Eintrittsbereichs (12) des Retroreflektorprismas (9) angeordnet ist, dass er von einem durch den Eintrittsbereich in das Retroreflektorprisma eintretenden Laserstrahl (5b) gequert wird und den eintretenden Laserstrahl in eine lineare Polarisation bringen kann.

2. Vorrichtung nach Anspruch 1, wobei der lineare Polarisator (10) ein metallisches Subwellenlängengitter (17) aufweist und wobei das metallische Subwellenlängengitter des linearen Polarisators eine Vielzahl von Metalllamellen (18) aufweist, die sich entlang einer Richtung der Metalllamelle (DM) parallel zueinander erstrecken und entlang einer Durchgangsrichtung des Metallgitters (DP) senkrecht zur Richtung der Metalllamelle nebeneinander angeordnet sind.

3. Vorrichtung nach Anspruch 2, wobei die Durchgangsrichtung (DP) des Metallgitters (17) parallel zu einer Überschneidungsrichtung (I) zwischen den jeweiligen geometrischen Erstreckungsebenen (P1, P2) der zwei Reflexionsflächen (14, 15) liegt.

4. Vorrichtung nach einem der Ansprüche 1 bis 3, wobei die Formdoppelbrechungslamelle (11) ein dielektrisches Subwellenlängengitter (20) mit der Zahl Null aufweist und wobei das dielektrische Subwellenlängengitter mit der Zahl Null der Formdoppelbrechungslamelle eine Vielzahl von dielektrischen Lamellen (21) aufweist, die sich entlang einer Richtung der dielektrischen Lamelle (DD) parallel zueinander erstrecken und entlang einer Richtung des dielektrischen Gitters (DR) senkrecht zur Richtung der dielektrischen Lamelle nebeneinander angeordnet sind.

5. Vorrichtung nach Anspruch 4 und einem der Ansprüche 2 bis 3, wobei die Richtung der dielektrischen Lamelle (DD) einen Winkel von 45° mit der Richtung der Metalllamelle (DM) bildet.

6. Vorrichtung nach einem der Ansprüche 1 bis 5, wobei der lineare Polarisator (10) und die Formdoppelbrechungslamelle (11) nebeneinander auf einer Leiterplatte - oder einem Wafer - aus Glas (19) angeordnet sind.

7. Vorrichtung nach einem der Ansprüche 1 bis 6, wobei der Eintrittsbereich (12) und der Austrittsbereich (13) des Retroreflektorprismas (9) zwei Abschnitte einer Transmissionsfläche (16) des Retroreflektorprismas bilden und wobei der lineare Polarisator (10) und die Formdoppelbrechungslamelle (11) gegenüber der Transmissionsfläche (16) platziert sind, wobei sie entweder auf der Transmissionsfläche (16) oder auf einer Leiterplatte - oder einem Wafer - aus Glas (19) gebildet sind, die bzw. der gegenüber der Transmissionsfläche (16) platziert ist.

8. Herstellungsverfahren für eine Vorrichtung (8) zur Formung eines Laserstrahls (5), insbesondere dafür gedacht, in einem Atomsensor (1), wie einer Atomuhr, einem Atommagnetometer oder einem Atomgyrometer, enthalten zu sein, indem sie einerseits einem Emissionslaser (3) eines Laserstrahls (5) und andererseits einer Alkalidampfzelle (2), die einen Hohlraum (6) umfasst, der mit einem Gas gefüllt ist, und in den ein geformter Laserstrahl (5e) eindringen kann, und einem Fotoempfänger (4) zum Empfangen eines Laserstrahls, der in die Zelle eingedrungen ist, zugeordnet wird, wobei:
- ein Retroreflektorprisma (9) vorhanden ist, das einen Eintrittsbereich (12) für einen eintretenden Laserstrahl (5b), einen Austrittsbereich (13) für einen austretenden Laserstrahl (5d) sowie zwei Reflexionsflächen (14, 15) für einen internen Laserstrahl (5c) aufweist, wobei die Reflexionsflächen zwischen sich einen rechten Winkel bilden,
- ein linearer Polarisator (10) gebildet und angeordnet wird, der einen eintretenden Laserstrahl (5b) in eine lineare Polarisation bringen kann, und der stromaufwärts des Eintrittsbereichs (12) des Retroreflektorprismas angeordnet ist, so dass er von einem durch den Eintrittsbereich in das Retroreflektorprisma eintretenden Laserstrahl gequert wird, und
- eine Formdoppelbrechungslamelle (11) gebildet und angeordnet wird, die einen austretenden Laserstrahl (5d) in eine kreisförmige Polarisation bringen kann, und die stromabwärts des Austrittsbereichs (13) des Retroreflektorprismas angeordnet ist, so dass sie von einem durch den Austrittsbereich aus dem Retroreflektorprisma austretenden Laserstrahl gequert wird.

9. Verfahren nach Anspruch 8, wobei
der lineare Polarisator (10) durch Ablagern einer Schicht aus metallischem Material auf einer Leiterplatte - oder einem Wafer - aus Glas (19), insbesondere einer Aluminium- oder Goldschicht, gebildet wird, und
die Formdoppelbrechungslamelle (11) auf der Leiterplatte - oder dem Wafer - aus Glas (19) entweder durch Ablagern einer Schicht aus dielektrischem Material, insbesondere einer Siliciumnitridschicht, auf der Leiterplatte - oder dem Wafer - aus Glas oder durch Gravieren der Leiterplatte - oder des Wafers - aus Glas gebildet wird,
der lineare Polarisator (10) stromaufwärts des Eintrittsbereichs (12) des Retroreflektorprismas und die Formdoppelbrechungslamelle (11) stromabwärts des Austrittsbereichs (13) des Retroreflektorprismas (9) angeordnet werden, indem die Leiterplatte - oder der Wafer - aus Glas (19) gegenüber einer Transmissionsfläche (16) des Retroreflektorprismas (9) platziert werden, wobei der Eintrittsbereich (12) und der Austrittsbereich (13) des Retroreflektorprismas zwei Abschnitte der Transmissionsfläche (16) bilden.

10. Verfahren nach Anspruch 8, wobei
der lineare Polarisator (10) stromaufwärts des Eintrittsbereichs (12) des Retroreflektorprismas (9) durch Ablagern einer Schicht aus metallischem Material, insbesondere einer Aluminium- oder Goldschicht, auf einer Transmissionsfläche (16) des Retroreflektorprismas (9) gebildet und angeordnet wird, wobei der Eintrittsbereich (12) des Retroreflektorprismas (9) einen Abschnitt der Transmissionsfläche (16) bildet, und
die Formdoppelbrechungslamelle (11) stromabwärts des Austrittsbereichs (13) des Retroreflektorprismas (9) entweder durch Ablagern einer Schicht aus dielektrischem Material, insbesondere einer Siliciumnitridschicht, auf der Transmissionsfläche (16) des Retroreflektorprismas (9), wobei der Austrittsbereich (13) des Retroreflektorprismas einen Abschnitt der Transmissionsfläche (16) bildet, oder durch Gravieren der Transmissionsfläche (16) gebildet und angeordnet wird.

11. Atomsensor (1), aufweisend eine Vorrichtung (8) zur Formung eines Laserstrahls (5) nach einem der Ansprüche 1 bis 7, die in kompakter Weise einerseits einem Emissionslaser (3) eines Laserstrahls (5) und andererseits einer Alkalidampfzelle (2), die einen Hohlraum (6) umfasst, der mit einem Gas gefüllt ist, und in den ein geformter Laserstrahl (5e) eindringen kann, und einem Fotoempfänger (4) zum Empfangen eines Laserstrahls (5), der in die Zelle eingedrungen ist, zugeordnet ist,

12. Atomsensor (1) nach Anspruch 11, wobei eine bevorzugte Polarisationsrichtung (DL) eines Laserstrahls (5), der von dem Emissionslaser (3) ausgestrahlt wird, im Wesentlichen mit der Durchgangsrichtung (DP) des Metallgitters (17) des linearen Polarisators (10) ausgerichtet ist.

## Claims

1. A laser beam (5) shaping device (8) intended in particular to be included in an atomic sensor (1) such as an atomic clock, an atomic magnetometer or an atomic gyrometer by being combined on the one hand with a laser beam (5) emission laser (3) and on the other hand with an alkaline vapour cell (2) comprising a cavity (6) filled with a gas and into which a shaped laser beam (5e) can enter and with a photodetector for receiving (4) a laser beam having entered the cell,
wherein the shaping device comprises a retroreflector prism (9) having an entrance area (12) for an entering laser beam (5b), an exit area (13) for an exiting laser beam (5d) as well as two internal laser beam (5c) reflection surfaces (14, 15), said reflection surfaces forming a right angle with one another, a form birefringence plate (11) disposed downstream from the exit area (13) of the retroreflector prism so as to be traversed by an exiting laser beam (5d) exiting the retroreflector prism through the exit area and able to impose a circular polarisation to said exiting laser beam to obtain a shaped laser beam (5e),
the shaping device being **characterised in that** it further comprises a linear polariser (10) disposed upstream from the entrance area (12) of the retroreflector prism (9) so as to be traversed by an entering laser beam (5b) entering the retroreflector prism through the entrance area and able to impose a linear polarisation to said entering laser beam.

2. The device according to claim 1, wherein the linear polariser (10) has a sub-wavelength metal network (17), and wherein the sub-wavelength metal network of the linear polariser has a plurality of metal plates (18) extending parallel to each other along a metal plate direction (DM) and being juxtaposed one relative to the other along a passing direction of the metal network (DP) perpendicular to the metal plate direction.

3. The device according to claim 2, wherein the passing direction (DP) of the metal network (17) is parallel to a direction of intersection (I) between respective geometric planes of extension (P1, P2) of the two reflection surfaces (14, 15).

4. The device according to any one of claims 1 to 3, wherein the form birefringence plate (11) has a zero-order sub-wavelength dielectric network (20), and wherein the zero-order sub-wavelength dielectric network of the form birefringence plate has a plurality of dielectric plates (21) extending parallel to each other along a dielectric plate direction (DD) and being juxtaposed one relative to the other along a dielectric network direction (DR) perpendicular to the dielectric plate direction.

5. The device according to claim 4 and any one of claims 2 and 3, wherein the dielectric plate direction (DD) forms an angle of 45° with the metal plate direction (DM).

6. The device according to any one of claims 1 to 5, wherein the linear polariser (10) and the form birefringence plate (11) are disposed side-by-side on a glass plate - or wafer (19).

7. The device according to any one of claims 1 to 6, wherein the entrance area (12) and the exit area (13) of the retroreflector prism (9) form two portions of a retroreflector prism transmission surface (16) and wherein the linear polariser (10) and the form birefringence plate (11) are placed facing said transmission surface (16), either formed on said transmission surface (16) or formed on a glass plate - or wafer - (19) placed facing said transmission surface (16).

8. A method for manufacturing a device (8) for laser beam (5) shaping intended in particular to be included in an atomic sensor (1) such as an atomic clock, an atomic magnetometer or an atomic gyrometer by being combined on the one hand with a laser beam (5) emission laser (3) and on the other hand with an alkaline vapour cell (2) comprising a cavity (6) filled with a gas and into which a shaped laser beam (5e) can enter and with a photodetector for receiving (4) a laser beam having entered the cell, wherein:
- a retroreflector prism (9) is available, which has an entrance area (12) for an entering laser beam (5b), an exit area (13) for an exiting laser beam (5d) and two internal laser beam (5c) reflection surfaces (14, 15), said reflection surfaces forming a right angle with one another,
- a linear polariser (10) is formed and disposed, which polariser is able to impose a linear polarisation to an entering laser beam (5b) and disposed upstream from the entrance area (12) of the retroreflector prism so as to be traversed by a laser beam entering the retroreflector prism by the entrance area, and
- a form birefringence plate (11) is formed and disposed, which plate is able to impose a circular polarisation to an exiting laser beam (5d) and disposed downstream from the exit area (13) of the retroreflector prism so as to be traversed by a laser beam exiting the retroreflector prism by the exit area.

9. The method according to claim 8, wherein
the linear polariser (10) is formed by depositing a metal layer on a glass plate -or wafer- (19), in particular an aluminium or gold layer, and
the form birefringence plate (11) is formed on said glass plate - or wafer - (19) either by depositing a layer of dielectric material, in particular a silicon nitride layer, on said glass plate - or wafer - or by etching said glass plate - or wafer -,
the linear polariser (10) is disposed upstream from the entrance area (12) of the retroreflector prism and the form birefringence plate (11) downstream from the exit area (13) of the retroreflector prism (9) by placing the glass plate - or wafer - (19) facing a transmission surface (16) of the retroreflector prism (9), wherein the entrance area (12) and the exit area (13) of the retroreflector prism form two portions of said transmission surface (16).

10. The method according to claim 8, wherein
the linear polariser (10) is formed and disposed upstream from the entrance area (12) of the retroreflector prism (9) by depositing a layer of metal material, in particular a layer of aluminium or gold, on a transmission surface (16) of the retroreflector prism (9), the entrance area (12) of the retroreflector prism (9) forming a portion of said transmission surface (16), and
the form birefringence plate (11) is formed and deposited downstream from the exit area (13) of the retroreflector prism (9) either by depositing a layer of dielectric material, in particular a layer of silicon nitride, on the transmission surface (16) of the retroreflector prism (9), the exit area (13) of the retroreflector prism forming a portion of said transmission surface (16), or by etching of said transmission surface (16).

11. An atomic sensor (1) having a device (8) for shaping a laser beam (5) according to any one of claims 1 to 7, combined, compactly, on the one hand with a laser beam (5) emission laser (3) and on the other hand with an alkaline vapour cell (2) comprising a cavity (6) filled with a gas and into which a shaped laser beam (5e) can enter and a photodetector for receiving (4) a laser beam (5) having entered the cell.

12. The atomic sensor according to claim 11, wherein a preferred direction of polarisation (DL) of a laser beam (5) emitted by the emission laser (3) is substantially aligned with the passing direction (DP) of the linear polariser (10) metal network (17).
